(19) Europäisches Patentamt
European Patent Office
Office européen des brevets

(11) Veröffentlichungsnummer : **0 414 053 B1**

(12) # EUROPÄISCHE PATENTSCHRIFT

(45) Veröffentlichungstag der Patentschrift :
**28.10.92 Patentblatt 92/44**

(51) Int. Cl.$^5$ : **C08G 64/06,** C08L 69/00

(21) Anmeldenummer : **90115292.6**

(22) Anmeldetag : **09.08.90**

(54) **Polycarbonate aus substituierten Cyclohexylidenbisphenolen.**

(30) Priorität : **22.08.89 DE 3927656**

(43) Veröffentlichungstag der Anmeldung :
**27.02.91 Patentblatt 91/09**

(45) Bekanntmachung des Hinweises auf die Patenterteilung :
**28.10.92 Patentblatt 92/44**

(84) Benannte Vertragsstaaten :
**DE FR GB IT**

(56) Entgegenhaltungen :
**EP-A- 0 019 126**
**EP-A- 0 019 127**
**EP-A- 0 359 953**
**DE-A- 2 653 145**
**US-A- 2 538 725**
**US-A- 4 368 315**
**PATENT ABSTRACTS OF JAPAN vol. 10, no. 225 (P-484)(2281) 6 August 1986, & JP-A-61 62040**

(56) Entgegenhaltungen :
**PATENT ABSTRACTS OF JAPAN vol. 10, no. 284 (P-501)(2340) 26 September 1986, & JP-A-61 105550**
**PATENT ABSTRACTS OF JAPAN vol. 10, no. 225 (P-484)(2281) 6 August 1986, & JP-A-61 62039**
**SCHNELL,H.: "CHEMISTRY AND PHYSICS OF POLYCARBONATES" 1964, INTERSCIENCE PUBLISHERS, NEW YORK**

(73) Patentinhaber : **BAYER AG**
**W-5090 Leverkusen 1 Bayerwerk (DE)**

(72) Erfinder : **Serini, Volker, Dr.**
**Sebastian-Kneipp-Weg 2**
**W-4150 Krefeld (DE)**
Erfinder : **Freitag, Dieter, Dr.**
**Hasenheide 10**
**W-4150 Krefeld (DE)**
Erfinder : **Idel, Karsten-Josef, Dr.**
**Am Schwarzkamp 38**
**W-4150 Krefeld (DE)**
Erfinder : **Grigo, Ulrich, Dr.**
**Michelsheide 9**
**W-4152 Kempen 3 (DE)**

EP 0 414 053 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind aromatische Polycarbonate mit mittleren Molekulargewichten $\overline{Mw}$ von mindestens 10.000, bevorzugt von 10.000 bis 250.000, besonders bevorzugt von 15.000 bis 80.000, ganz besonders bevorzugt von 20.000 - 60.000 und insbesonders von 20.000 - 40.000, die bifunktionelle Carbonatstruktureinheiten der Formel (I)

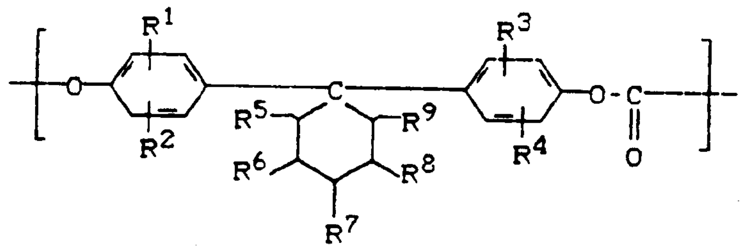

(I)

mit

$R^1$, $R^2$, $R^3$, $R^4$ unabhängig voneinander Wasserstoff, $C_1$- bis $C_{12}$-Kohlenwasserstoffrest oder Halogen und mit

$R^5$, $R^6$, $R^7$, $R^8$ und $R^9$ unabhängig voneinander Wasserstoff oder $C_1$- bis $C_{12}$-Kohlenwasserstoffrest, wobei jeweils einer der Reste $R^5$ und $R^9$ Wasserstoff und einer ein $C_1$- bis $C_{12}$-Kohlenwasserstoffrest ist,

in Mengen von 100 bis 1 Mol-%, bevorzugt 100 bis 10 Mol-%, besonders bevorzugt 100 bis 20 Mol-%, ganz besonders bevorzugt 100 bis 40 Mol-% und insbesondere 100 bis 70 Mol-% und davon wiederum bevorzugt 100 Mol-%, bezogen auf die Gesamtmenge von difunktionellen Carbonatstruktureinheiten im Polycarbonat, enthalten, und deren Verwendung zur thermoplastischen Verarbeitung zu Formkörpern.

Gegenstand der Erfindung sind weiterhin Legierungen aus

A) 1 bis 99 Gew.-%, mindestens eines der erfindungsgemäßen Polycarbonate, wie sie oben beschrieben sind,

B) 0 bis 99 Gew.-% mindestens eines von (A) verschiedenen amorphen Thermoplasten mit einer Glastemperatur von 40 bis 300°C,

C) 0 bis 99 Gew.-% mindestens eines teilkristallinen Thermoplasten mit einer Schmelztemperatur von 60 bis 400°C,

D) 0 bis 99 Gew.-% mindestens eines Kautschuks,

E) 0 bis 99 Gew.-% mindestens eines Pfropfpolymerisats aus mindestens einem Kautschuk mit mindestens einem aufgepfropften Polymer aus mindestens einem Monomeren aus der Gruppe der Vinylverbindungen, Acryl- und Methacrylverbindungen und Maleinsäureabkömmlinge,

in denen die Summe aus A), B), C), D) und E) gleich 100 Gew.-% beträgt, und deren Verwendung zur thermoplastischen Verarbeitung zu Formkörpern.

In den japanischen Patentschriften 61 062 039, 61 062 040 und 61 105 550 werden Polycarbonate beschrieben, die teilweise oder ganz aus Struktureinheiten der Formel (IA) bestehen, mit

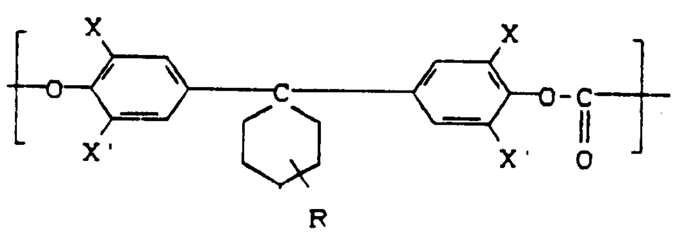

(IA)

X und X' gleich Wasserstoff, Halogen oder Methyl und mit

R gleich Wasserstoff, Halogen, OH, COOH, Acetyl oder $C_1$-$C_4$-Alkyl (in JP 61 062 040 $C_1$-$C_5$-Alkyl).

Als Beispiele für Carbonatstruktureinheiten der Formel (IA) werden Carbonatstruktureinheiten auf Basis von 1,1-Bis-(4-hydroxyphenyl)-3-methylcyclohexan und 1,1-Bis-(4-hydroxyphenyl)-4-methylcyclohexan genannt. Carbonatstruktureinheiten der Formel (IA) auf Basis des 1,1-Bis-(4-hydroxyphenyl)-4-methylcyclohexan sind in der JA 61 105 550 auch in einem Copolycarbonat mit Bisphenol A zu 50 Mol-% enthalten. Die den

in unserer Anmeldung beanspruchten Polycarbonaten zugrundeliegenden Carbonatstruktureinheiten der Formel (I) werden jedoch in den obengenannten japanischen Patentschriften nicht beschrieben.

Es wurde nun überraschend gefunden, daß Polycarbonate auf Basis von bifunktionellen Carbonatstruktureinheiten der Formel (I) gegenüber den bisher in den obengenannten japanischen Patentschriften beschriebenen Polycarbonaten mit Carbonatstruktureinheiten auf Basis von 1,1-Bis-(4-hydroxyphenyl)-3-methylcyclohexan und 1,1-Bis-(4-hydroxyphenyl)-4-methylcyclohexan Vorteile aufweisen. Weiterhin wurde überraschend gefunden, daß entgegen den Erwartungen des Fachmanns die thermoplastische Verarbeitung der erfindungsgemäßen Polycarbonate technisch akzeptabel durchführbar ist und daß die erhältlichen Formkörper erstaunlich gute Eigenschaften zeigen.

Gegenüber den in den japanischen Patentschriften beschriebenen Polycarbonaten mit Carbonatstruktureinheiten auf Basis von 1,1-Bis-(4-hydroxyphenyl)-3-methylcyclohexan und 1,1-Bis-(4-hydroxyphenyl)-4-methylcyclohexan weisen beispielsweise die erfindungsgemäßen Polycarbonate mit Carbonatstruktureinheiten auf Basis von 1,1-Bis-(4-hydroxyphenyl)-2-methylcyclohexan bei guter Wärmestandfestigkeit höhere Zähigkeit gegen Schlag und Stoß auf.

Den Carbonatstruktureinheiten der Formel (I) liegen Biphenole der Formel (II)

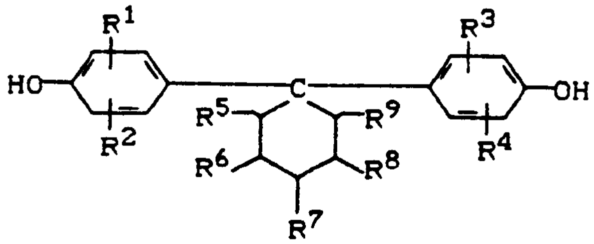 (II)

zugrunde, in der

$R^1$, $R^2$, $R^3$, $R^4$, $R^5$, $R^6$, $R^7$, $R^8$ und $R^9$ die gleiche Bedeutung wie in Formel (I) haben.

In den Formeln (I) und (II) sind $R^1$, $R^2$, $R^3$ und $R^4$ bevorzugt Wasserstoff, Methyl, Ethyl, Phenyl, Cyclohexyl, Chlor und Brom, besonders bevorzugt jedoch Wasserstoff, Methyl und Brom und insbesondere Wasserstoff.

Wenn mehr als einer der Reste $R^1$, $R^2$, $R^3$ und $R^4$ ungleich Wasserstoff ist, werden gleiche Substituenten bevorzugt. Wenn zwei der Reste $R^1$, $R^2$, $R^3$ und $R^4$ ungleich Wasserstoff sind, wird die o,o'-Substitution, bezogen auf die Carbonatgruppen (Formel (I)) bzw. die phenolischen OH-Gruppen (Formel (II)), bevorzugt. Wenn alle vier Reste $R^1$, $R^2$, $R^3$ und $R^4$ ungleich Wasserstoff sind, wird die o,o,o',o'-Substitution, bezogen wie vor, bevorzugt.

Bevorzugt sind in den Formeln (I) und (II) mindestens zwei der Reste $R^5$, $R^6$, $R^7$, $R^8$ und $R^9$ $C_1$-$C_{12}$-Kohlenwasserstoffreste. Bevorzugt sind in den Formeln (I) und (II) weiterhin neben einem der Reste $R^5$ und $R^9$ die Reste $R^6$ und $R^8$ $C_1$-$C_{12}$-Kohlenwasserstoffreste.

In den Formeln (I) und (II) können die Reste $R^5$, $R^6$, $R^7$, $R^8$ und $R^9$ $C_1$-$C_{12}$-Kohlenwasserstoffreste bedeuten. Solche Kohlenwasserstoffreste sind beispielsweise n-Alkylreste, wie z.B. Methyl, Ethyl, n-Propyl, n-Butyl, n-Pentyl, n-Hexyl, n-Heptyl, n-Octyl, n-Nonyl, n-Decyl, n-Undecyl und n-Dodecyl sowie $C_3$-$C_{12}$-Isoalkylreste, wie z.B. Isopropyl, tert.-Butyl, 1-Methylpropyl, 1,1-Dimethylpropyl, 1-Methylbutyl, 1,2-Dimethylpropyl, 2,2-Dimethylpropyl, Isohexyl, Isoheptyl, Isooctyl (wie z.B. 1,1,3,3-Tetramethylbutyl), Isononyl (wie z.B. 3,5-Dimethylheptyl), Isodecyl, Isoundecyl und Isododecyl, weiterhin $C_6$-$C_{12}$-Cycloalkyl, wie z.B. Cyclohexyl, mit n-Alkyl oder Isoalkyl substituiertes Cyclohexyl (wie z.B. Methyl-, Ethyl-, Isopropyl-, oder tert.-Butyl-Cyclohexyl), Aryl-substituiertes Cyclohexyl (wie z.B. Phenylcyclohexyl) und Cyclohexyl, an das Phenylreste anelliert sind, Aryl (wie z.B. Phenyl und Naphthyl), Aralkyl (wie z.B. Benzyl und Cumenyl), Alkaryl (wie z.B. Methylphenyl und Isopropylphenyl) und Cycloalkyl substituiertes Alkyl (wie z.B. Perhydrocumenyl).

In den Formeln (I) und (II) werden für die Reste $R^6$, $R^7$ und $R^8$ als $C_1$-$C_{12}$-Kohlenwasserstoffreste bevorzugt Methyl, Ethyl, tert.-Butyl, 1,1-Dimethylpropyl, 1,1,3,3-Tetramethylbutyl, Phenyl, Cyclohexyl, Phenyl-substituiertes $C_1$-$C_3$-Alkyl, Cyclohexyl-substituiertes $C_1$-$C_3$-Alkyl und besonders bevorzugt Methyl, tert.-Butyl, 1,1,3,3-Tetramethylpropyl, Phenyl, Cyclohexyl, Cumenyl und Perhydrocumenyl eingesetzt.

In den Formeln (I) und (II) werden für die Reste $R^5$ und $R^9$ als $C_1$-$C_{12}$-Kohlenwasserstoffreste bevorzugt Methyl und Phenyl, besonders bevorzugt Methyl eingesetzt.

Beispiele für Bisphenole der Formel (II) sind:

1,1-Bis-(4-hydroxyphenyl)-2-methyl-cyclohexan

1,1-Bis-(3-methyl-4-hydroxyphenyl)-2-methylcyclohexan

1,1-Bis-(3,5-dimethyl-4-hydroxyphenyl)-2-methylcyclohexan

1,1-Bis-(3-chlor-4-hydroxyphenyl)-2-methylcyclohexan
1,1-Bis-(3,5-dichlor-4-hydroxyphenyl)-2-methylcyclohexan
1,1-Bis-(3,5-dibrom-4-hydroxyphenyl)-2-methylcyclohexan
1,1-Bis-(3-phenyl-4-hydroxyphenyl)-2-methylcyclohexan
1,1-Bis-(3,5-diethyl-4-hydroxyphenyl)-2-methylcyclohexan.
1,1-Bis-(4-hydroxyphenyl)-2,3-dimethyl-cyclohexan
1,1-Bis-(4-hydroxyphenyl)-2,4-dimethyl-cyclohexan
1,1-Bis-(4-hydroxyphenyl)-2,5-dimethyl-cyclohexan
1,1-Bis-(4-hydroxyphenyl)-2,3,5-trimethyl-cyclohexan
1,1-Bis-(4-hydroxyphenyl)-2,4,5-trimethyl-cyclohexan
1,1-Bis-(4-hydroxyphenyl)-2-phenyl-cyclohexan
1,1-Bis-(4-hydroxyphenyl)-2-methyl-4-tert.-butyl-cylohexan
1,1-Bis-(4-hydroxyphenyl)-2-methyl-4-phenyl-cyclohexan
1,1-Bis-(4-hydroxyphenyl)-2-methyl-5-tert.-butyl-cyclohexan
1,1-Bis-(4-hydroxyphenyl)-2-methyl-3,5-di-tert.-butyl-cyclohexan,
1,1-Bis-(4-hydroxyphenyl)-2-methyl-4-cyclohexyl-cyclohexan
1,1-Bis-(4-hydroxyphenyl)-2-methyl-4-cumenyl-cyclohexan
1,1-Bis-(4-hydroxyphenyl)-2-methyl-4-perhydrocumenyl-cyclohexan.

Bisphenole der Formel können z.B. aus Cyclohexanonen der Formel (III)

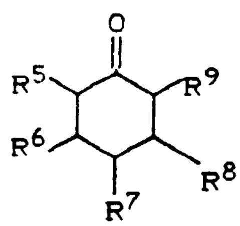

(III)

und Phenolen der Formel (IV) und (IVa),

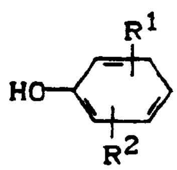

(IV)

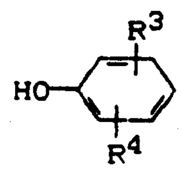

(IVa)

in denen $R^1$, $R^2$, $R^5$, $R^6$, $R^7$, $R^8$ und $R^9$ die oben angegebene Bedeutung haben, durch Umsetzung bei etwa 0-100°C in Anwesenheit eines sauren Katalysators - bevorzugt HCl oder saurer Ionenaustauscher - und gegebenenfalls eines schwefelhaltigen Cokatalysators, wie z.B. 3-Mercaptopropionsäure, hergestellt werden.

Die erfindungsgemäßen Polycarbonate enthalten neben den Carbonatstruktureinheiten der Formel (I) jeweils zu 100 Mol-% komplementäre Mengen an anderen difunktionellen Carbonatstruktureinheiten, beispielsweise solche der Formel (V), denen Bisphenole der Formel (VI) zugrundeliegen.

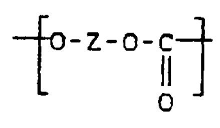

(V)

HO-Z-OH (VI)

Bisphenole der Formel (VI) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (II) oder Heteroatome als Brückenglieder enthalten kann.

Beispiele für Diphenole der Formel (VI) sind
Hydrochinon,

Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VI) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Als Kettenabbrecher zur Regelung des Molekulargewichts dienen in bekannter Weise monofunktionelle Verbindungen in üblichen Konzentrationen. Geeignete Verbindungen sind z.B. sekundäre Amine, Phenole und Säurechloride. Bevorzugt werden Phenole, z.B. tert.-Butylphenole oder andere Alkyl-substituierte Phenole. Zur Regelung des Molekulargewichts sind insbesondere kleine Mengen Phenole der Formel (VII) geeignet,

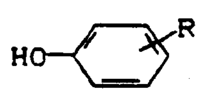

(VII)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %.

Einige besonders geeignete Phenole sind Phenol, p-tert.-Butylphenol, Hydroxydiphenyl, p-Cumylphenol und insbesondere p-3,5-Dimethylheptylphenol und m- und p-1,1,3,3-Tetramethylbutylphenol. Ganz besonders bevorzugt ist das p-1,1,3,3-Tetramethylbutylphenol. Die Kettenabbrecher werden im allgemeinen in Mengen von 0,1 bis 10, bevorzugt 0,5 bis 8 Mol-%, bezogen auf eingesetzte Diphenole, eingesetzt.

Unter erfindungsgemäßen Polycarbonaten, die auch erfindungsgemäß Verwendung zur thermoplastischen Verarbeitung zu Formkörpern finden, werden auch beliebige Mischungen von mindestens zwei Polycarbonaten verstanden, vorausgesetzt, sie genügen den eingangs gestellten Anforderungen an die Art und das Verhältnis der bivalenten Carbonatstruktureinheiten der Formeln (I) und (V) und an das mittlere Molekulargewicht $\overline{M}_w$. Bevorzugt sind jedoch Polycarbonate, deren Zusammensetzung durch die Synthese festgelegt ist, die also nicht durch nachträgliches Mischen erhältlich sind.

Die erfindungsgemäßen Polycarbonate können nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden.

Hierbei werden die Diphenole der Formel (II) in wäßrig alkalischer Phase gelöst. Zur Herstellung von Co-Polycarbonaten mit anderen Diphenolen werden Gemische von Diphenolen der Formel (II) und den anderen Diphenolen, beispielsweise denen der Formel (VI), eingesetzt. Zur Regulierung des Molekulargewichtes können Kettenabbrecher z.B. der Formel (VII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt im allgemeinen zwischen 0°C und 40°C.

Neben den einzusetzenden Diphenolen der Formel (II) sowie den anderen Diphenolen der Formel (VI) können auch deren Mono- und/oder Bis-chlorkohlensäureester mitverwendet werden, wobei diese in organischen Lösungsmitteln gelöst zugegeben werden. Die Menge an Kettenabbrechern richtet sich dann nach Molen Diphenolat-Struktureinheiten von (II) und gegebenenfalls von den anderen Diphenolat-Struktureinheiten wie beispielsweise von (VI); ebenso kann bei Einsatz von Chlorkohlensäureestern die Phosgenmenge in bekannter Weise entsprechend reduziert werden.

Als organische Phase für die Phasengrenzflächenpolykondensation sowie als organische Lösungsmittel für die Lösung der Kettenabbrecher sowie gegebenenfalls für die Chlorkohlensäureester können beispielsweise chlorierte Kohlenwasserstoffe, wie Chloroform, Dichlorethan, Di-und Tetrachlorethylen, Tetrachlorethan, Methylenchlorid, Chlorbenzol und Dichlorbenzol, aber auch nicht chlorierte Kohlenwasserstoffe, wie z.B. Toluol und Xylol, sowie Mischungen dieser Lösungsmittel, insbesondere Mischungen aus Methylenchlorid und Chlorbenzol dienen. Gegebenenfalls können die verwendeten Kettenabbrecher im gleichen Solvens gelöst werden.

Als organische Phase für die Phasengrenzflächenpolykondensation dienen beispielsweise Methylenchlorid, Chlorbenzol oder Toluol sowie Mischungen aus Methylenchlorid und Chlorbenzol.

Als wäßrige alkalische Phase dient beispielsweise wäßrige NaOH-Lösung oder KOH-Lösung.

Die Herstellung der erfindungsgemäßen Polycarbonate nach dem Phasengrenzflächenverfahren kann in üblicher Weise durch Katalysatoren wie tertiäre Amine und Phasentransferkatalysatoren, insbesondere tertiäre aliphatische Amine wie z.B. Tributylamin, Triethylamin, N-Ethylpiperidin und insbesondere quartäre Ammonium- und Phosphoniumverbindungen und Kronenether, wie z.B. Tetrabutylammoniumbromid und Triphenylbenzylphosphoniumbromid katalysiert werden; die Katalysatoren werden im allgemeinen in Mengen von 0,05 bis 30 Mol-%, bezogen auf Mole an eingesetzten Diphenolen, eingesetzt. Die Katalysatoren werden im allgemeinen vor Beginn der Phosgenierung oder während oder auch nach der Phosgenierung zugesetzt.

Die erfindungsgemäßen Polycarbonate werden in bekannter Weise, aus dem primären Reaktionsprodukt abgetrennt, z.B. indem man die bei der Phasengrenzflächenpolykondensation erhaltene organische Phase mit dem darin gelösten Polycarbonat abtrennt, neutral und elektrolytfrei wäscht und dann das Polycarbonat beispielsweise mit einen Eindampfextruder als Granulat, oder durch Fällung mit Hilfe eines Nichtlösers und anschließende Trocknung oder durch Sprühverdampfung als Pulver bzw. als Pellets gewinnt.

Den erfindungsgemäßen Polycarbonaten können vor oder während ihrer Verarbeitung die für thermoplastische Polycarbonate üblichen Additive wie z.B. Stabilisatoren, Entformungsmittel, Pigmente, Flammschutzmittel, Antistatika, Leitfähigkeitszusätze, Füllstoffe und Verstärkungsstoffe in den üblichen Mengen zugesetzt werden.

Im einzelnen können beispielsweise Graphit, Ruß, Metallfasern, Metallpulver, Kieselgur, Quarz, Kaolin, Glimmer, Tone, $CaF_2$, $CaCO_3$, Aluminiumoxide, Aluminiumnitrid, Silicate, Bariumsulfat, Glasfasern, C-Fasern, Keramik-Fasern und anorganische und organische Pigmente zugesetzt werden, sowie als Entformungsmittel beispielsweise Ester mehrwertiger Alkohole mit langkettigen Carbonsäuren wie Glycerinstearate, Pentaerythrittetrastearat und Trimethylolpropantristearat.

Die erfindungsgemäßen Polycarbonate können z.B. durch Spritzguß, Extrusion, Blasverformung oder Tiefziehen thermoplastisch zu Formkörpern verarbeitet werden, wobei man beispielsweise die oben genannten Additive zufügen kann. Unter Formkörpern werden z.B. spritzgegossene Formkörper, extrudierte Formkörper, wie Profile, Rohre, Platten, Fasern und Folien, blasverformte Körper, wie Flaschen, Behälter und Beleuchtungskörper, sowie z.B. aus Platten und Folien tiefgezogene Formkörper verstanden.

Die Folien können im Verbund mit anderen Folien zu Verbundfolien verarbeitet werden. Weiterhin können die erfindungsgemäßen Legierungen auch in anderen Verbundwerkstoffen eingesetzt werden, z.B. in Kombination mit Fasern und anderen Polymeren.

Formkörper aus den erfindungsgemäßen Polycarbonaten sind beispielsweise im Elektrosektor sowie im Bausektor mit Vorteil einsetzbar, wenn hohe Wärmeformbeständigkeit bei gleichzeitig guter Zähigkeit gefordert ist.

Die erfindungsgemäßen Legierungen mit Polycarbonaten auf Basis substituierter Cyclohexylidenbisphenole (A) weisen bedeutende Vorteile gegenüber bisher bekannten Legierungen mit Polycarbonaten auf. Sie besitzen gleichzeitig hohe Wärmestandfestigkeit, gute Fließfähigkeit der Schmelze und hohe Temperaturstabilität, selbst unter Luftsauerstoffeinfluß. Sie sind besonders strukturviskos, was für die Spritzguß- und die Extrusionsverarbeitung von bedeutendem Nutzen ist; Spritzgußteile sind leicht entformbar. Die Legierungen sind außerdem sehr zäh, besonders kriechstromfest, hydrolytisch stabil und stabil gegen UV- und $\gamma$-Strahlen. Weiterhin haben sie eine hohe Gasdurchlässigkeit und eine hohe Selektivität für Gastrennungen, so beispielsweise für die Trennung von Kohlendioxid/Sauerstoff-Gemischen.

Die erfindungsgemäßen thermoplastischen Legierungen enthalten bevorzugt 5 bis 98 Gew.-%, besonders bevorzugt 10 bis 95 Gew.-% und insbesondere 20 bis 90 Gew.-% mindestens eines thermoplastischen aromatischen Polycarbonats (A) mit difunktionellen Carbonatstruktureinheiten der Formel (I). Sie enthalten bevorzugt 0 bis 90 Gew.-%, besonders bevorzugt 0 bis 75 Gew.-% und insbesondere 0 bis 60 Gew.-% mindestens eines amorphen Thermoplasten (B). Sie enthalten bevorzugt 0 bis 90 Gew.-%, besonders bevorzugt 0 bis 75 Gew.-% und insbesondere 0 bis 60 Gew.-% mindestens eines teilkristallinen Thermoplasten (C). Sie enthalten bevorzugt 0 bis 90 Gew.-%, besonders bevorzugt 0 bis 75 Gew.-% und insbesondere 0 - 60 Gew.-% mindestens eines Pfropfpolymerisats (E). Zusätzlich enthalten sie bevorzugt 0 bis 80 Gew.-%, besonders bevorzugt 0 bis 60 Gew.-%, ganz besonders bevorzugt 0 bis 45 Gew.-%, und insbesondere 0 bis 30 Gew.-%, mindestens eines Kautschuks (D).

In den erfindungsgemäßen thermoplastischen Legierungen beträgt die Summe aus dem Kautschuk (D) und dem Kautschukanteil des Pfropfpolymerisats (E) bevorzugt 0 bis 80 Gew.-%, besonders bevorzugt 0 bis 60 Gew.-%, ganz besonders bevorzugt 0 bis 45 Gew.-% und insbesondere 0 bis 30 Gew.-%.

Die erfindungsgemäßen thermoplastischen Legierungen enthalten bevorzugt neben mindestens einem thermoplastischen aromatischen Polycarbonat (A) mit difunktionellen Carbonatstruktureinheiten der Formel (I), einen oder zwei Bestandteile aus B), C), D) und E).

Besonders bevorzugte Legierungen sind thermoplastische Legierungen aus mindestens einem thermoplastischen Polycarbonat (A) mit difunktionellen Carbonatstruktureinheiten der Formel (I) und 1 bis 99 Gew.-% mindestens eines amorphen Thermoplasten (B), oder 1 bis 99 Gew.-% mindestens einem Pfropfpolymerisats (E). Insbesondere bevorzugt sind Legierungen aus den Bestandteilen A) und B).

Besonders bevorzugte Legierungen sind auch solche aus mindestens einem thermoplastischen Polycarbonat (A) mit difunktionellen Carbonatstruktureinheiten der Formel (I), 1 bis 98 Gew.-%, bevorzugt 20 bis 75 Gew.-% und besonders bevorzugt 30 bis 60 Gew.-%, mindestens eines teilkristallinen Thermoplasten mit einer Schmelztemperatur von 60 bis 400°C (C) und 1 bis 98 Gew.-%, bevorzugt 10 bis 35 Gew.-% und besonders bevorzugt 15 bis 25 Gew.-%, mindestens eines Pfropfpolymerisats aus mindestens einem Kautschuk und mindestens einem aufgepfropften Polymer (E).

Besonders bevorzugte Legierungen sind thermolastische Legierungen aus mindestens einem thermoplastischen Polycarbonat (A) mit difunktionellen Carbonatstruktureinheiten der Formel (I) aus 1 bis 98 Gew.-%, bevorzugt 10 bis 70 Gew.-%, besonders bevorzugt 20 bis 60 Gew.-%, mindestens eines amorphen Thermoplasten (B) mit einer Glastemperatur von 40 bis 300°C und aus 1 bis 98 Gew.-%, bevorzugt 10 bis 80 Gew.-%, besonders bevorzugt 20 bis 60 Gew.-%, mindestens eines Pfropfpolymerisats aus mindestens einem Kautschuk und mindestens einem aufgepfropften Polymer (E).

Besonders bevorzugt sind ebenfalls thermoplastische Legierungen aus mindestens einem thermoplastischen Polycarbonat (A) mit difunktionellen Carbonatstruktureinheiten der Formel (I) aus 1 bis 98 Gew.-%, bevorzugt 10 bis 80 Gew.-%, besonders bevorzugt 20 bis 70 Gew.-%, mindestens eines amorphen Thermoplasten (B) mit einer Glastemperatur von 40 bis 300°C und aus 1 bis 60 Gew.-%, bevorzugt 1 bis 20 Gew.-% und besonders bevorzugt 2 bis 5 Gew.-% mindestens eines Kautschuks (D).

Die amorphen Thermoplasten (B) besitzen eine Glastemperatur von bevorzugt 50 bis 280°C, besonders bevorzugt 60 bis 250°C und ganz besonders bevorzugt 80 bis 230°C.

Die teilkristallinen Thermoplasten (C) haben Schmelztemperaturen von bevorzugt 70 bis 350°C, besonders bevorzugt 80 bis 320°C und insbesondere von 100 bis 300°C.

Beispiele für erfindungsgemäß als Legierungsbestandteil (B) einsetzbare amorphe Thermoplaste sind aromatische Polycarbonate ohne difunktionelle Carbonatstruktureinheiten der Formel (I), aromatische Polycarbonate ohne difunktionelle Carbonatstruktureinheiten der Formel (I) mit eingebauten Polysiloxanblöcken, eingebauten aliphatischen Polyetherblöcken oder eingebauten aliphatischen Polyesterblöcken, aromatische Polyester, aromatische Polyestercarbonate ohne difunktionelle Carbonatstruktureinheiten der Formel (I), aliphatisch-aromatische Polyester, Polyamide, Polyarylensulfone, aromatische Polyether, aromatische Polyimide, Polyepoxide, Vinylpolymere und (Meth)Acrylpolymere.

Von diesen Beispielen werden bevorzugt die aromatischen Polycarbonate und Polyestercarbonate ohne difunktionelle Carbonatstruktureinheiten der Formel (I), die aromatischen Polycarbonate ohne difunktionelle Carbonatstruktureinheiten der Formel (I) mit eingebauten Polysiloxanblöcken, aromatische Polyester, aliphatisch-aromatische Polyester, Polyamide und Vinylpolymere und besonders bevorzugt die aromatischen Polyester, die aromatischen Polyestercarbonate ohne difunktionelle Carbonatstruktureinheiten der Formel (I), die Polyamide und die Vinylpolymeren eingesetzt.

Erfindungsgemäß sind als Legierungsbestandteil (B) aromatische Polycarbonate ohne difunktionelle Carbonatstruktureinheiten der Formel (I) einsetzbar. Solche Polycarbonate enthalten nur difunktionelle Carbonatstruktureinheiten der Formel (V), denen Bisphenole der Formel (VI) zugrundeliegen. Dabei kann es sich um Homopolycarbonate aus nur einem Bisphenol oder Copolycarbonate aus mindestens zwei Bisphenolen handeln. Für die Polycarbonate gilt in bezug auf Molekulargewicht, Verzweiger, Kettenabbrecher und Herstellverfahren das für die Polycarbonate (A) mit Carbonatstruktureinheiten der Formel (I) Gesagte. Die unter der Formel (VI) als bevorzugt genannten Bisphenole werden auch hier bevorzugt.

Als Legierungsbestandteil B) können auch Polycarbonat-Polysiloxan-Blockcopolymere dienen, in denen der Polycarbonatanteil aus mindestens einem aromatischen Bisphenol der Formel (VI) aufgebaut ist. Die Polysiloxanblöcke können beispielsweise in das Polycarbonat-Polysiloxan-Blockcopolymer eingebaut werden, indem man Polysiloxane mit Cl- oder Bisphenol-Endgruppen in die Polycarbonatreaktion, z.B. nach dem Zweiphasengrenzflächenverfahren, mit einführt. Solche Polysiloxane sind beispielsweise Polydimethylsiloxane der Formeln (VIII) und (IX) mit

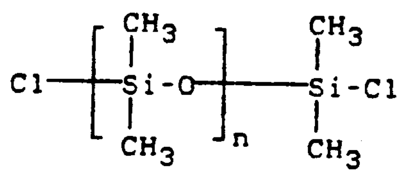

(VIII)

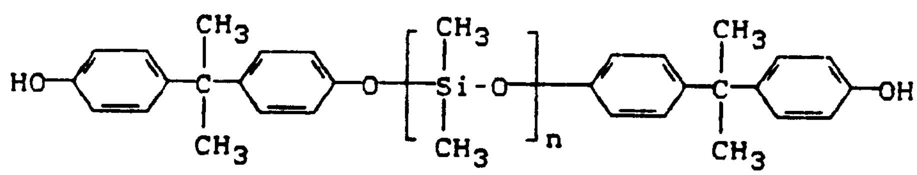

(IX)

mittleren Polykondensationsgraden von n = 5 bis 200. Solche und weitere einsetzbare Polysiloxanblöcke sind vielfach in der Literatur beschrieben. Der Siloxangehalt in den Polycarbonat-Polysiloxan-Blockcopolymeren kann in weiten Grenzen variiert werden, so z.B. von 0,1 bis 80 Gew.-%, je nach den gewünschten Eigenschaften des Blockcopolymers. Die Herstellung von geeigneten, in Polycarbonat einbaubaren Polysiloxanblöcken und die Synthese von Polycarbonat-Polysiloxan-Copolymeren wird beispielsweise beschrieben in: US-PS 3 189 662, DE-PS 1 595 790, DE-PS 2 411 123, DE-OS 2 411 363, EP-A-216 106, DE-OS 3 506 472.

Als Legierungsbestandteil B) können beispielsweise auch Polycarbonat-Polyether-Blockcopolymere und Polycarbonat-Polyester-Blockcopolymere dienen mit aliphatischen Polyetherblöcken, z.B. Polyethylenoxid-, Polypropylenoxid- und bevorzugt Polybutylenoxid-Blöcken, oder mit aliphatischen Polyesterblöcken, z.B. aus Hexandiol-Adipinsäurepolyester oder Hexandiol-Dimerfettsäure-Polyester. Blockcopolymere dieser Art und ihre Herstellung sind beschrieben in den DE-OS 2 636 783, 2 636 784, 2 827 325, 2 726 376, 2 726 416, 2 726 417, 2 712 435, 2 702 626.

Erfindungsgemäß als Legierungsbestandteil B) einsetzbare aromatische Polyester und Polyestercarbonate sind aus mindestens einem aromatischen Bisphenol der Formel (VI), aus mindestens einer aromatischen Dicarbonsäure und gegebenenfalls aus Kohlensäure aufgebaut. Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4',5-dicarbonsäure.

Von den aromatischen Dicarbonsäuren werden besonders bevorzugt die Terephthalsäure und/oder Isophthalsäure eingesetzt. Für die Bisphenole gelten die unter Formel (VI) genannten Bevorzugungen.

Aromatische Polyester und Polyestercarbonate können nach Verfahren hergestellt werden, wie sie für die Polyester- bzw. Polyestercarbonat-Herstellung aus der Literatur bekannt sind, so z.B. nach Verfahren in homogener Lösung, nach Schmelzumesterungsverfahren und nach dem Zweiphasengrenzflächenverfahren. Bevorzugt werden Schmelzumesterungsverfahren und insbesondere das Zweiphasengrenzflächenverfahren angewandt.

Schmelzumesterungsverfahren (Acetatverfahren und Phenylesterverfahren) werden beispielsweise in den US-PS 3 494 885, 4 386 186, 4 661 580, 4 680 371 und 4 680 372, den EP-A-26 120, 26 121, 26 684, 28 030, 39 845, 91 602, 97 970, 79 075, 146 887, 156 103, 234 913, 234 919 und 240 301 und den DE-AS 1 495 626, 2 232 877 beschrieben. Das Zweiphasengrenzflächenverfahren wird beispielsweise beschrieben in EP-A-68 014, 88 322, 134 898, 151 750, 182 189, 219 708, 272 426 in DE-OS 2 940 024, 3 007 934, 3 440 020 und in Polymer Reviews, Volume 10, Condensation Polymers by Interfacial and Solution Methods, Paul W. Morgan, Interscience Publishers New York, 1965, Kap. VIII, S. 325, Polyester.

Beim Acetatverfahren werden im allgemeinen Bisphenoldiacetat bzw. Bisphenol und Acetatanhydrid sowie aromatische Dicarbonsäure unter Abspaltung von Essigsäure zum Polyester kondensiert.

Beim Phenylesterverfahren werden im allgemeinen Bisphenol, aromatische Dicarbonsäure bzw. Diphenylester der aromatischen Dicarbonsäure und gegebenenfalls Diphenylcarbonat unter Phenolabspaltung und gegebenenfalls $CO_2$-Abspaltung zum Polyester bzw. Polyestercarbonat umgesetzt.

Beim Zweiphasengrenzflächenverfahren dienen als Ausgangsstoffe zur Herstellung von Polyestern bzw. Polyestercarbonaten im allgemeinen Alkalibisphenolat, aromatisches Dicarbonsäuredichlorid und gegebenenfalls Phosgen. Bei dieser Kondensationsreaktion werden der Polyester bzw. das Polycarbonat unter Alkalichloridbildung hergestellt. Im allgemeinen ist das gebildete Salz in der wäßrigen Phase gelöst, während der gebildete Polyester bzw. das gebildete Polyestercarbonat in der organischen Phase gelöst vorliegt und daraus isoliert wird.

Aliphatisch-aromatische Polyester, die als Legierungsbestandteil B) eingesetzt werden können, sind beispielsweise amorphe Polyester aus Cyclohexan-1,4-dimethanol und Terephthalsäure und/oder Isophthalsäure, die als Comonomere noch andere Dicarbonsäuren und aliphatische Dihydroxyverbindungen einkondensiert enthalten können, z.B. Glykol, Propylenglykol und Butylenglykol. Beispiele für solche Polyester sind Cyclohexan-1,4-dimethanol-Terephthalsäure-Polyeester, Cyclohexan-1,4-dimethanol-Terephthalsäure-Isophthalsäure-Copolyester und Cyclohexan-1,4-dimethanol-Terephthalsäure-Ethylenglykol-Copolyester. Solche Polyester werden beispielsweise beschrieben in EP-A-273 151, 273 152, 155 989, 226 974, 185 309, 152 825, 226 189, 272 416 und US-PS 4 188 314, 4 634 737.

Amorphe thermoplastische Polyamide, die als Legierungsbestandteil B) verwendet werden können, sind beispielsweise zu erhalten durch Polykondensation von Diaminen wie Ethylendiamin, Tetramethylendiamin, Hexamethylendiamin, Decamethylendiamin, 2,2,4- und 2,4,4-Trimethylhexamethylendiamin, m- und p-Xylylendiamin, Bis-(4-aminocyclohexyl)-methan, Gemischen aus 4,4′- und 2,2′-Diaminodicyclohexylmethanen, 2,2-Bis-(4-aminocyclohexyl)-propan, 3,3′-Dimethyl-4,4′-diamino-dicyclohexylmethan, 3-Aminoethyl-3,5,5-trimethyl-cyclohexyl-amin, 2,5-Bis-(aminomethyl)-norbornan, 2,6-Bis-(aminomethyl)-norbornan und 1,4-Diamino-methylcyclohexan, und von beliebigen Gemischen dieser Diamine mit Dicarbonsäuren, wie beispielsweise mit Oxalsäure, Adipinsäure, Azelainsäure, Decandicarbonsäure, Heptadecandicarbonsäure, 2,2,4-Trimethyladipinsäure, 2,4,4-Trimethyladipinsäure, Isophthalsäure und Terephthalsäure, und mit beliebigen Gemischen dieser Dicarbonsäuren. Es sind somit auch amorphe Copolyamide einbezogen, die durch Polykondensation mehrerer der vorstehend genannten Diamine und/oder Dicarbonsäuren erhalten werden. Ferner sind amorphe Copolyamide einbezogen, die unter Mitverwendung von ω-Aminocarbonsäuren wie ω-Aminocapronsäure, ω-Aminoundecansäure oder ω-Aminolaurinsäure oder von deren Lactamen hergestellt sind.

Besonders geeignete, amorphe, thermoplastische Polyamide sind solche, die aus Isophthalsäure, Hexamethylendiamin und weiteren Diaminen wie 4,4′-Diaminodicyclohexylmethan, Isophorondiamin, 2,2,4- und/oder 2,4,4-Trimethylhexamethylendiamin, 2,5- und/oder 2,6-Bis-(aminomethyl)-norbornan erhältlich sind, solche, die aus Isophthalsäure, 4,4′-Diamino-di-cyclohexylmethan und ω-Caprolactam erhältlich sind, solche, die aus Isophthalsäure, 3,3′-Dimethyl-4,4′-diamino-dicyclohexylmethan und ω-Laurinlactam erhältlich sind, und solche, die aus Terephthalsäure und 2,2,4- und/oder 2,4,4-Trimethylhexamethylendiamin erhältlich sind.

Anstelle des reinen 4,4′-Diaminodicyclohexylmethans können auch Gemische der stellungsisomeren Diaminodicyclohexylmethane eingesetzt werden, die sich zusammensetzen aus

70 bis 99 Mol-% des 4,4′-Diaminoisomeren
1 bis 30 Mol-% des 2,4′-Diaminoisomeren
0 bis 2 Mol-% des 2,2′-Diaminoisomeren

und gegebenenfalls entsprechend höherkondensierten Diaminen, die durch Hydrierung von Diaminodiphenylmethan technischer Qualität erhalten werden.

Die amorphen Polyamide und deren Herstellung sind bekannt (siehe beispielsweise Ullmann, Enzyklopödie der technischen Chemie, Band 19, S. 50).

Polyarylensulfone, die als Legierungsbestandteil B) eingesetzt werden können, haben im allgemeinen mittlere Molekulargewichte $\overline{M}w$ (Gewichtsmittel; gemessen nach der Lichtstreumethode in $CHCl_3$) von 10.000 bis 200.000, vorzugsweise von 20.000 bis 90.000. Beispiele dafür sind die nach bekannten Verfahren erhältlichen Polyarylensulfone aus 4,4'-Dichlordiphenylsulfon und mindestens einem Bisphenol, insbesondere 2,2-Bis-(4-hydroxyphenyl)-propan und Bis-(4-hydroxyphenyl)-sulfon, die beispielsweise zu Polyarylensulfonen mit difunktionellen Sulfonstruktureinheiten der Formeln (X) und (XI) führen.

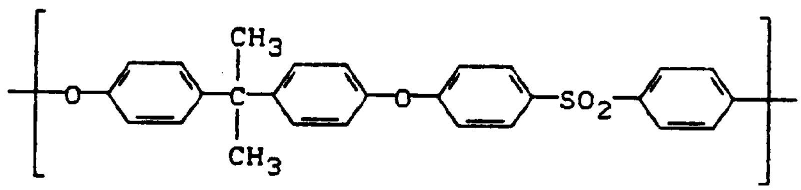
(X)

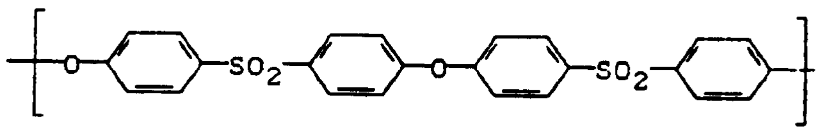
(XI)

Diese Polyarylensulfone sind bekannt (siehe beispielsweise US-PS 3 264 536, DE-AS 1 794 171, GB-PS 1 264 900, US-PS 3 641 207, EP-A-00 38 028, DE-OS 3 601 419 und DE-OS 3 601 420, EP 149 359, EP 294 773 und die Veröffentlichungen G. Blinne et al., Kunststoffe 75/1 (1985) 29-34 und R.N. Johnson et al., Journal of Polymer Science, Part A1, 5 (1967) 2375-2398. Die geeigneten Polyarylensulfone können auch in bekannter Weise verzweigt sein (siehe beispielsweise DE-OS 2 305 413).

Aromatische Polyether, die erfindungsgemäß als Legierungsbestandteil B) Einsatz finden können, sind beispielsweise Polyphenylenoxide. Polyphenylenoxide sind bekannt und werden beispielsweise beschrieben in US-PS 3 306 874, 3 306 875, 3 257 357, 3 257 358, 3 661 848, 3 219 625, 3 378 505, 3 639 656, 4 011 200, 3 929 930, EP-A-O 248 526, 0 271 699, DE-OS 2 126 434. Die Molekulargewichte $\overline{M}w$ Gewichtsmittel) sind im allgemeinen 10.000 bis 80.000, bevorzugt 15.000 bis 60.000.

Polyphenylenoxide werden im allgemeinen durch eine oxidative Kupplungsreaktion von einem oder mehreren zweifach oder dreifach substituierten Phenolen als Homo- oder Copolymere erhalten. Als Katalysator der Reaktion dient im allgemeinen ein Kupfer-Amin-Komplex. Verwendet werden können Kupfer-Amin-Komplexe primärer, sekundärer und/oder tertiärer Amine. Beispiele von geeigneten Homo-Polyphenylenoxiden sind:

Poly-(2,3-dimethyl-6-ethylphenylen-1,4-ether),
Poly-(2,3,6-trimethylphenylen-1,4-ether),
Poly-(2,4'-methylphenylphenylen-1,4-ether),
Poly-(2-bromo-6-phenylphenylen-1,4-ether),
Poly-(2-methyl-6-phenylphenylen-1,4-ether),
Poly-(2-phenylphenylen-1,4-ether),
Poly-(2-chlorophenylen-1,4-ether),
Poly-(2-methylphenylen-1,4-ether),
Poly-(2-chloro-6-ethylphenylen-1,4-ether),
Poly-(2-chloro-6-bromophenylen-1,4-ether),
Poly-(2,6-di-n-propylphenylen-1,4-ether),
Poly-(2-methyl-6-isopropylphenylen-1,4-ether),
Poly-(2-chloro-6-methylphenylen-1,4-ether),
Poly-(2-methyl-6-ethylphenylen-1,4-ether),
Poly-(2,6-dibromophenylen-1,4-ether),
Poly-(2,6-dichlorophenylen-1,4-ether),
Poly-(2,6-diethylphenylen-1,4-ether),
Poly-(2,6-dimethylphenylen-1,4-ether).

Geeignete copolymere Polyphenylenoxide können z.B. von zwei oder mehr Phenolen hergestellt werden,

die für die Herstellung der oben aufgeführten Homopolyphenylenoxide verwendet werden. Besonders bevorzugt ist der Poly-(2,6-dimethylphenylen-1,4-ether). Pfropf- und Blockcopolymere aus Polyphenylenoxiden und Polyvinylaromaten wie Polystyrol sind auch geeignet als Legierungsbestandteil B). Geeignete styrolgepfropfte Polyphenylenoxide werden beispielsweise in der Veröffentlichung "Xyron", Japan plastics age, März/April 1979, S 29 - 33 beschrieben.

Aromatische Polyimide, die als Legierungsbestandteil B) einsetzbar sind, sind beispielsweise aromatische Polyetherimide, wie sie in US-PS 4 395 518, 3 855 178, EP-A-120 183, 120 184, 179 471, 292 243, 278 066, DE-PS 2 735 501 und den Veröffentlichungen Polyetherimid, Kunststoffe-Plastics 4/1982, S. 32-35, Polyetherimide, Kunststoffe 73/5 (1983), S. 266-269, R.O. Johnson und H.S. Burlhis, J. of Pol. Sc., Polymer Symp. 70 (1983) S. 129-143 und D.M. White et al., J. of Pol. Sc., Pol. Chemistry Ed., 19 (1981), S. 1635-1685, beschrieben sind. Die Synthese dieser Polyetherimide kann, die dort beschrieben, beispielsweise durch Umsetzen von Bisnitrobisphthalimiden und Alkalibisphenolaten unter Abspaltung von Alkalinitrit oder durch Umsetzen von Bisetherbisphthalsäureanhydriden mit Diaminen unter Wasserabspaltung erhalten werden. Ein bevorzugtes aromatisches Polyetherimid ist beispielsweise das aus wiederkehrenden Einheiten der Formel (XII)

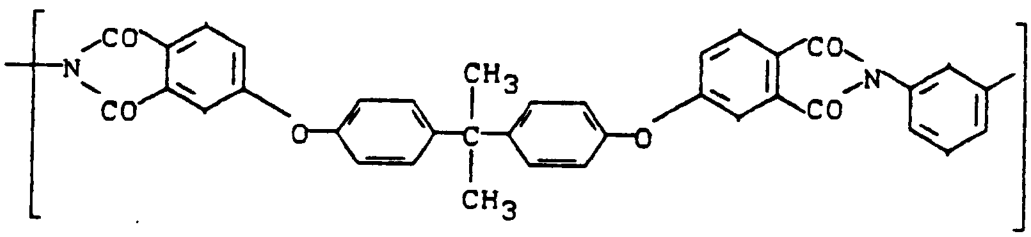

(XII)

Polyepoxide, die als Legierungsbestandteil B) eingesetzt werden könnn, sind beispielsweise Polyepoxide, wie sie aus Epichlorhydrin und Bisphenolen, z.B. Bisphenol A, nach bekannten Methoden hergestellt werden können. Formel (XIII) zeigt ein besonders bevorzugtes Epoxid, in dem n beispielsweise 5 bis 200 sein kann.

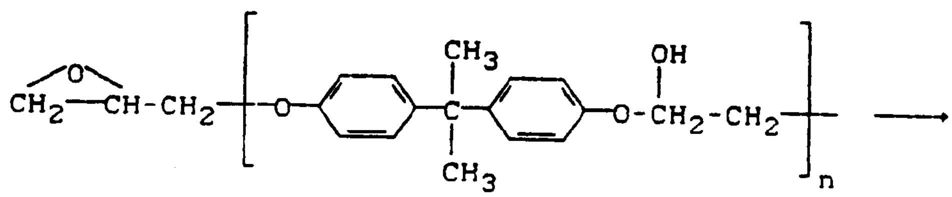

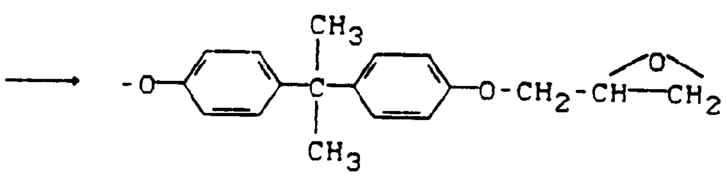

(XIII)

Vinylpolymere und (Meth-)Acrylpolymere, wie sie als Legierungsbestandteil B) einsetzbar sind, sind Homo- und Copolymerisate, beispielsweise aus folgenden Monomeren:

1. Styrol und seine Derivate wie z.B. α-Methylstyrol, α-Chlorstyrol, p-Chlorstyrol, 2,4-Dichlorstyrol, p-Methylstyrol, 3,4-Dimethylstyrol, o- und p-Divinylbenzol, p-Methyl-α-methylstyrol und p-Chlor-α-methylstyrol, bevorzugt Styrol und α-Methylstyrol.
2. Acryl- und Methacrylverbindungen wie z.B. Acryl - und Methacrylsäure, Acrylnitril, Methacrylnitril, Methylacrylat, Äthylacrylat, n- und Isopropylacrylat, n- und Isobutylacrylat, tert.-Butylacrylat, 2-Äthylhexylacrylat, Methylmethacrylat, Äthylmethacrylat, n- und Isopropylmethacrylat, n- und Isobutylmethacrylat, tert.-Butylmethacrylat, Cyclohexylmethacrylat und Isobornylmethacrylat, bevorzugt Acrylnitril, Methacrylnitril, Methylmethacrylat, tert.-Butylmethacrylat.
3. Maleinsäureanhydrid und dessen Abkömmlinge, wie Maleinsäureester, Maleinsäurediester und Maleinimide, z.B. Alkyl- und Arylmaleinimide, wie beispielsweise Methyl- oder Phenylmaleinimid, bevorzugt Maleinsäureanhydrid und Maleinimide, insbesondere Phenylmaleinimid.

Die Monomeren der Gruppe 3 dienen im allgemeinen als Comonomere zu den Monomeren der Gruppen 1 und 2.

Beispiele für geeignete Homo- und Copolymerisate sind Polystyrol, Polymethylmethacrylat, Styrol-Methylstyrol-Copolymere, Styrol-Acrylnitril-Copolymere, α-Methylstyrol-Acrylnitril-Copolymere, Styrol-Maleinsäureanhydrid-Copolymere, Styrol Phenylmaleinimid-Coplymere, Styrol-Methylmethacrylat-Copolymere, Methylmethacrylat/Acrylnitril-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-tert.-Butylmethacrylat-Copolymere, Styrol-Acrylnitril-tert.-Butylmethacrylat-Copolymere.

Die Vinylpolymeren und (Meth-)Acrylpolymeren können nach bekannten radikalischen, anionischen und kationischen Polymerisationsverfahren hergestellt werden. Auch die bekannte Redoxpolymerisation oder die bekannte Polymerisation mit metallorganischen Mischkatalysatoren kann vorteilhaft sein. Die Polymerisation kann in Masse, Lösung oder Emulsion stattfinden, wie bekannt.

Auch gemischte Verfahren wie Lösungs-, Fällungs- oder Massesuspensionsverfahren können Einsatz finden, wie bekannt. Die Gewichtsmittel-Molekulargewichte der Vinylpolymeren und (Meth-)Acrylpolymeren betragen im allgemeinen 10.000 bis 300.000, bevorzugt 30.000 bis 200.000.

Beispiele für erfindungsgemäß als Legierungsbestandteil C) einsetzbare teilkristalline Thermoplaste sind Polyolefine, Ionomere, aliphatisch-aromatische Polyester, Polyamide, aromatische Polyetherketone und Polyphenylensulfide. Besonders bevorzugt sind aliphatisch-aromatische Polyester und die Polyamide, besonders bevorzugt die aliphatisch-aromatischen Polyester.

Als Legierungsbestandteil C) sind erfindungsgemäß teilkristalline Polyolefine einsetzbar. Solche Polyolefine sind beispielsweise Homo- und Copolymerisate von Olefinen, wie z.B. Ethylen, Propylen, Buten-1, Penten-1, Hexen-1, Hepten-1, 3-Methylbuten-1, 4-Methylbuten-1, 4-Methylpenten-1, Octen-1 und andere. Einige solcher Polyolefine sind Polyethylen, Polypropylen, Polybuten-1, Poly-4-methylpenten-1. Beim Polyethylen unterscheidet man PE, HDPE (high density), LDPE (low density), und LLDPE (very low density). Die unterschiedlichen Dichten des Polyethylens kommen durch unterschiedliche Verfahren und Cokondensation mit anderen Monomeren zustande, wie bekannt. Bekannte Verfahren zur Herstellung von Polyolefinen sind z.B. das Hochdruckverfahren und das Niederdruckverfahren (Ziegler-Natta-Katalyse mit metallorganischen Mischkatalysatoren).

Bevorzugte Legierungsbestandteile C) sind Polyethylen und Poly-4-Methylpenten-1, besonders bevorzugt ist Polyethylen. Die Polyolefine können neben den Olefinen auch noch untergeordnete Mengen anderer Monomerer enthalten.

Als Legierungsbestandteil C) sind erfindungsgemäß auch Ionomere geeignet. Dabei handelt es sich im allgemeinen um Polyolefine, wie oben beschrieben, insbesondere um Polyethylen, die Monomere mit Säuregruppen cokondensiert enthalten, wie z.B. Acrylsäure, Methacrylsäure. Die Säuregruppen werden mit Hilfe von Metallionen wie beispielsweise $Na^{+}$, $Ca^{++}$, $Mg^{++}$ und $Al^{+++}$ in ionische, ggf. ionisch vernetzte Polyolefine umgewandelt, die sich jedoch noch thermoplastisch verarbeiten lassen. Solche Polymeren sind beispielsweise Ethylen-Acrylsäure-Copolymere, deren Säuregruppen in metallsalzartige Gruppen umgewandelt sind. Beschrieben werden solche Ionomeren z.B. in den Patentschriften US 3 264 272, 3 404 134, 3 355 319, 4 321 337.

Aromatisch-aliphatische Polyester, die als teilkristalliner Legierungsbestandteil C) einsetzbar sind, sind bevorzugt Polyalkylenterephthalate, also beispielsweise solche auf Basis von Ethylenglykol, Propandiol-1,3, Butandiol-1,4, Hexandiol-1,6 und 1,4-Bis-hydroxymethylcyclohexan. Besonders bevorzugt werden Polybutylenterephthalate, Polyethylenterephthalate und Copolymere aus Cyclohexan-1,4-dimethanol und Ethylenglykol sowie Terephthalsäure eingesetzt, soweit diese teilkristallin sind. Ganz besonders bevorzugt wird das Polybutylenterephthalat eingesetzt.

Die Molekulargewichte $\overline{M}w$ (Gewichtsmittel) dieser Polyalkylenterephthalate sind im allgemeinen 10.000 bis 200.000, bevorzugt 10.000 bis 80.000. Die Polyalkylenterephthalate können nach bekannten Verfahren beispielsweise aus Terephthalsäuredialkylester und dem entsprechenden Diol durch Umesterung erhalten werden (s. z.B. US-PS 2 647 885, 2 643 989, 2 534 028, 2 578 660, 2 742 494, 2 901 466).

Teilkristalline Polyamide, die sich als Legierungsbestandteil C) eignen, sind insbesondere Polyamid-6, Polyamid-6,6, Polyamid-4,6 und teilkristalline Copolyamide auf Basis dieser Komponenten. Weiterhin kommen teilkristalline Polyamide in Betracht, deren Säurekomponente insbesondere ganz oder teilweise (z.B. neben ε-Caprolactam) aus Adipinsäure und/oder Terephthalsäure und/oder Isophthalsäure und/oder Korksäure und/oder Sebacinsäure und/oder Azelainsäure und/oder Dodecandicarbonsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4-und/oder 2,4,4-Trimethylhexamethylendiamin und/oder Isophorondiamin besteht und deren Zusammensetzungen im Prinzip aus dem Stand der Technik bekannt sind (siehe beispielsweise Encyclopedie of Polymers, Vol. 11, S. 315 ff).

Außerdem sind geeignet teilkristalline Polyamide, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide sind Polyamid-6 und Polyamid-6,6 oder Copolyamide mit geringem Anteil, z.B. bis etwa 10 Gewichtsprozent, an anderen Co-Komponenten.

Als teilkristalliner Legierungsbestandteil C) lassen sich auch aromatische Polyetherketone einsetzen, die beispielsweise in den Patentschriften GB 1 078 234, US 4 010 147, EP 135 938, 292 211, 275 035, 270 998, 165 406, JA 62 151 421 und in den Veröffentlichungen C.K. Sham et. al., Polymer 29/6 (1988), S. 1016 - 1020, und J.E. Harris et al., J. Appl. Polym. Sc. 35/7 (1988), S. 1877 - 1891 beschrieben sind. Diese Polyetherketone können beispielsweise erhalten werden, indem man Bisphenole mit Bis-(halogenaryl)-ketonen in polaren aprotischen Lösungsmitteln in Gegenwart von Alkalicarbonaten umsetzt. So können beispielsweise durch Umsetzung von Hydrochinon mit 4,4'-Difluorbenzophenon Polymere mit difunktionellen Struktureinheiten der Formel (XIV) und durch Umsetzung von Bis-(4-hydroxyphenyl)keton mit 4,4'-Difluorbenzophenon Polymere mit difunktionellen Struktureinheiten der Formel (XV)

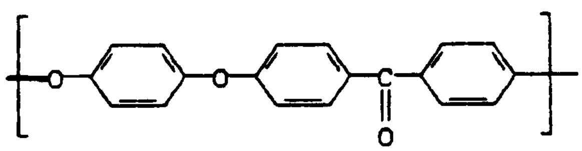

(XIV)

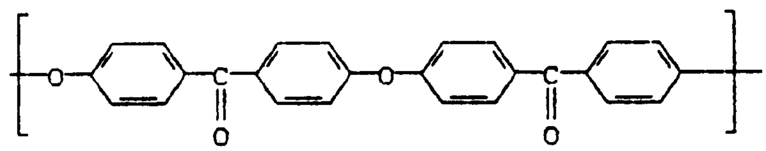

(XV)

erhalten werden. Diese Polymere sind bevorzugt einsetzbare Polyetherketone.

Polymere, die als teilkristalliner Legierungsbestandteil C) einsetzbar sind, sind auch thermoplastische lineare oder verzweigte Polyarylensulfide. Sie haben Struktureinheiten der allgemeinen Formel (XVI)

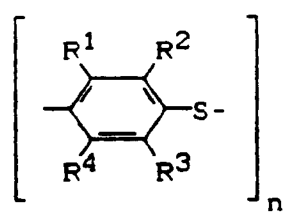

(XVI)

worin $R^1$ bis $R^4$ unabhängig voneinander $C_1$-$C_6$-Alkyl, Phenyl oder Wasserstoff bedeuten. Die Polyarylensulfide können auch Diphenyl-Einheiten enthalten. Am bedeutendsten ist das Polyarylensulfid mit $R^1$ bis $R^4$ gleich H.

Polyarylensulfide und ihre Herstellung sind bekannt und werden beispielsweise in den US-PS 3 354 129, 3 786 035, 3 853 824, 3 856 560, 3 862 095 und EP-A- 0 171 021 sowie in den Veröffentlichungen W. Baerecke, International Polymer Science and Technology, Vol. 1, No. 9, 1974, S. T/52 - T/54 und A.S. Wood, Mod. Plast. Int. 18/4 (1988) S. 34 - 37 beschrieben.

Als Kautschuke (D) können thermoplastische Kautschuke eingesetzt werden. Solche thermoplastischen Kautschuke sind beispielsweise thermoplastische Polyurethane, Polyetherester, Polyesteramide, Polyetheramide, thermoplastische Olefinelastomere, Ethylen-Ethylacrylat-Copolymere, Styrol-Butadien-Segment-Polymere, Styrol-Isopren-Segment-Polymere, hydrierte Styrol-Butadien-Segment-Polymere. Bevorzugt werden thermoplastische Polyurethane, Polyetherester und insbesondere hydrierte Styrol-Butadien-Segment-Polymere eingesetzt.

Die thermoplastischen Polyurethane werden beispielsweise aus drei Komponenten hergestellt, aus langkettigen bifunktionellen Polyolen, kurzkettigen Diolen oder Diamin und Diisocyanat. Die Umsetzung der drei Komponenten erfolgt z.B. bei Starttemperaturen zwischen 60 und 140°C unter starkem Rühren. Dabei reagieren die Isocyanat- mit den Hydroxylgruppen unter Bildung Urethangruppen ohne Abspaltung von Nebenprodukten. Nach Zerkleinern und mehrtägiger Lagerung kann das Elastomer thermoplastisch verarbeitet werden. Langkettige geeignete Polyole sind beispielsweise Äthandiol-polyadipat, Butandiol-1,4-polyadipat, Äthandiol-butandiol-polyadipat, Hexandiol-1,6-neopentylglykol-polyadipat, Propylenglykol(1,2)-polyäther, Tetramethylenoxid (= Tetrahydrofuran-polyäther), Hexandiol-1,6-polycarbonat und Polycaprolacton.

Kurzkettige geeignete Diole oder Diamine (Kettenverlängerer) sind z.B. Äthandiol, Butandiol-1,4, Hexandiol-1,6, Hydrochinon-di-β-hydroxyäthyl-äther und Isophorondiamin.

Geeignete Diisocyanate sind beispielsweise 4,4′-Diphenylmethan-diisocyanat (MDI), Hexamethylen-diisocyanat (HDI), Isophoron-diisocyanat (IPDI) und 1,5-Naphthylen-diisocyanat (NDI).

Die thermoplastischen Polyurethane und ihre Herstellung werden in der Veröffentlichung W. Goyert et al., Kunststoffe 68. Jahrgang 1978, S. 2 - 8, in der Monographie J.H. Saunders et al., Polyurethanes, Chemistry and Technology, Vol. II, S. 299 - 451, Interscience Publishers, New York, 1964, und in den Patentschriften US 2 729 618, US 3 214 411 beschrieben.

Geeignete Polyetherester sind beispielsweise Blockcopolymere aus weichen Segmenten wie Polytetramethylenglykol- oder Polypropylenglykol- oder Polyethylenglykol-Terephthalat und harten Segmenten aus Polybutylenterephthalat wie beispielsweise in J.W. Crary, GAK 7/1986, Jahrgang 39, S. 330 - 334, und G.K. Hoeschele, Chimica 28/9 (1974) S. 544 - 552 beschrieben.

Geeignete Polyesteramide und Polyetheramide sind beispielsweise beschrieben in den EP-A-126 928, DE-OS 2 523 991, EP-A-281 461 und der Veröffentlichung Kunststoffe 72/5 (1982), S. 282 - 283. Es sind Blockcopolymere aus Polyethersegmenten wie Polyethylenglykol, Polypropylenglykol und Polybutylenglykol und Polyamidsegmenten wie PA 6, PA 66, PA 11, PA 12, PA 611, P 612.

Geeignete Styrol-Butadien-, Styrol-Isopren- und hydrierte Styrol-Butadien-Segment-Polymere sind beispielsweise in US-PS 3 333 024, 3 753 936, 3 281 383, DE-PS 2 819 493, DE-OS 2 613 200 und 2 643 757 beschrieben. Bevorzugt werden die SEBS-Blockcopolymeren und die hydrierten SEBS-Blockcopolymeren (SEBS = Styrol-Ethylen-Butylen-Styrol-Blockcopolymere).

Als Kautschuke (D) können auch andere Kautschuke als die oben genannten thermoplastischen Kautschuke eingesetzt werden. Solche Kautschuke sind beispielsweise Naturkautschuk, Epichlorhydrin-Kautschuke, Ethylen-Vinylacetat-Kautschuke, Polyethylenchlorsulfonkautschuke, Siliconkautschuke, Polyetherkautschuke, Dienkautschuke, hydrierte Dienkautschuke, Polyalkenamer-Kautschuke, Acrylatkautschuke, Ethylen-Propylen-Kautschuke, Ethylen-Propylen-Dien-Kautschuke, Butylkautschuke, Fluorkautschuke. Bevorzugt werden Siliconkautschuke, Dienkautschuke, hydrierte Dienkautschuke, Acrylatkautschuke, Ethylen-Propylen-Dien-Kautschuke (Dien z.B. Dicyclopentadien, Äthylidennorbornen oder Hexadien-1,4).

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol, Acryl- oder Methacrylverbindungen (z.B. Acrylnitril, Methacrylnitril, Acrylsäure, Methacrylsäure, Acrylsäurebutylester und Methylmethacrylat).

Besonders bevorzugt werden von den Dien-Kautschuken Butadien-, Butadien-Styrol-, Butadien-Methylmethacrylat, Butadien-Acrylsäurebutylester- und Butadien-Acrylnitril-Kautschuke. Acrylatkautschuke sind beispielsweise Alkylacrylat-Kautschuke auf der Basis von einem oder mehreren $C_1$-$C_8$-Alkylacrylaten, so insbesonders von Ethyl-, Butyl, Octyl-, 2-Ethylhexylacrylat. Diese Alkylacrylatkautschuke können bis zu 30 Gew.-% Monomere wie Vinylacetat, Acrylnitril, Styrol, Methylmethacrylat, Vinylether copolymerisiert enthalten. Diese Alkylacrylatkautschuke können weiterhin kleine Mengen (bis zu 5 Gew.-%) vernetzend wirkender polyfunktioneller Monomerer copolymerisiert enthalten. Beispiele sind Ester von ungesättigten Carbonsäuren mit einem Polyol (vorzugsweise 2 bis 20 Kohlenstoffatome in der Estergruppe) wie Ethylenglykoldimethacrylat. Ester einer mehrbasischen Carbonsäure mit einem ungesättigten Alkohol (vorzugsweise 8 bis 30 Kohlenstoffatome im Esterrest) wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest) wie Allylmethacrylat; Phosphorsäureester, z.B. Triallylphosphat und 1,3,5-Triacryloylhexahydro-s-triazin. Besonders bevorzugte polyfunktionelle Monomere sind Triallylcyanurat, Triallylisocyanurat, Triallylphosphat, Allylmethacrylat.

Geeignete Acrylatkautschuke sind auch Produkte, die einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern und einem Acrylatmantel enthalten.

Geeignete Siliconkautschuke können z.B. vernetzte Siliconkautschuke aus Einheiten der allgemeinen Formeln $R_2SiO$, $RSiO_{3/2}$, $R^3SiO_{1/2}$ und $SiO_{2/4}$ sein, wobei R einen einwertigen Rest darstellt. Die Mengen der einzelnen Siloxaneinheiten sind dabei so bemessen, daß auf 100 Einheiten der Formel $R_2SiO$ 0 bis 10 Mol-Einheiten der Formel $RSiO_{3/2}$, 0 bis 1,5 Mol-Einheiten $R_3SiO_{1/2}$ und 0 bis 3 Mol.-Einheiten der Formel $SiO_{2/4}$ vorhanden sind.

R kann dabei entweder ein einwertiger gesättigter Kohlenwasserstoffrest mit 1 bis 18 Kohlenstoffatomen, der Phenylrest oder der Alkoxy-Rest oder eine radikalisch angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Methyl.

Bevorzugte Silikonkautschuke enthalten eingebaute Einheiten radikalisch angreifbarer Gruppen, insbesondere Vinyl-, Allyl-, Halogen-, Mercaptogruppen, vorzugsweise in Mengen von 2 bis 10 Mol.-%, bezogen auf alle Reste R.

Sie können beispielsweise hergestellt werden, wie in EP-A-260 558 beschrieben.

Als Pfropfpolymerisate E) können in den erfindungsgemäßen Legierungen Pfropfpolymerisate eingesetzt werden, die durch radikalische Polymerisation von mindestens einem der vorstehend in drei Gruppen aufgeführten Monomeren in Gegenwart mindestens eines Kautschuks (nicht thermoplastischer Kautschuk) erhalten werden. Bevorzugte Herstellverfahren sind die Emulsions-, Lösungs-, Masse- oder Suspensionspolymerisation. So können die Pfropfpolymerisate beispielsweise durch radikalische Emulsionspfropfpolymerisation der Vinylmonomeren in Gegenwart von Kautschuklatices bei Temperaturen von 50 bis 90°C unter Verwendung wasserlöslicher Initiatoren wie Peroxodisulfat, oder mit Hilfe von Redoxinitiatoren erzeugt werden.

Einsatz können auch Kautschuke finden, die bereits aus vorgebildeten Kern-Mantel-Kautschukteilchen bestehen, die aus zwei verschiedenen Kautschuken bestehen. So kann beispielsweise der Kern aus einem Polybutadien-Kautschuk oder einem Siliconkautschuk bestehen und der Mantel aus einem Acrylatkautschuk (s. oben und z.B. EP 260 558 Kern/Mantel aus Silicon/Acrylat). Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den zu pfropfenden Monomeren können polyfunktionelle vernetzende oder reaktive Gruppen enthaltende Monomere mit aufgepfropft werden, um bestimmte Wirkungen in der Legierung zu erzielen (s. z.B. EP-A-230 282, DE-OS 3 601 419, EP-A-269 861).

Die Pfropfpolymerisate E) enthalten im allgemeinen 5 bis 90 Gew.-%, insbesondere 20 bis 85 Gew.-% Kautschuk und 95 bis 10 Gew.-%, insbesondere 80 bis 15 Gew.-%, pfropfcopolymerisierte Monomere. Die Kautschuke liegen in diesem Pfropfmischpolymerisaten im allgemeinen in Form wenigstens partiell vernetzter Teilchen einer mittleren Teilchengröße von 0,05 bis bis 5 µm, bevorzugt von 0,1 bis 2 µm, insbesondere von 0,1 bis 1 µm, vor.

Die bei den Vinylpolymeren und (Meth-)Acrylpolymeren sowie bei den Kautschuken als bevorzugt oder besonders bevorzugt genannten Monomeren und Kautschuke werden auch bei den Pfropfpolymerisaten bevorzugt bzw. besonders bevorzugt.

Die Polymerlegierungen dieser Erfindung können auf verschiedene Weise hergestellt werden. So können die Ausgangspolymeren gemeinsam in einem Lösungsmittel oder einem Lösungsmittelgemisch gelöst werden. Durch gemeinsames Ausfällen der Polymeren durch Zugabe eines Nichtlösers oder Eintropfen der Lösung in ein Fällungsmittel kann die Polymerlegierung erhalten werden, ebenso wie durch Abdampfen des Lösungsmittels.

Bevor die endgültige Mischung aller Legierungsbestandteile erfolgt, können auch einzelne Polymeren der endgültigen Legierung allein gemischt werden. So können beispielsweise Latices eines harzartigen Copolymerisats (z.B. Styrol-Acrylnitril-Copolymer) und eines Kautschuks (z.B. Butadien-Acrylnitril-Copolymer) durch gemeinsame Fällung gemischt werden, bevor sie mit dem Polycarbonat zur endgültigen Formmasse legiert werden.

Die Legierung der Ausgangspolymeren kann jedoch auch über die Schmelze in Mischvorrichtungen wie z.B. Extrudern, Innenknetern und Mischwalzen erfolgen.

Den einzelnen Legierungsbestandteilen können während ihrer Herstellung oder nach ihrer Herstellung übliche Additive zugesetzt werden, auch über ihre Lösung oder Schmelze. Übliche Additive können auch der Legierung während ihrer Herstellung zugesetzt werden. Auch der fertigen Legierung können übliche Additive zugesetzt werden, auch über ihre Lösung oder Schmelze.

Übliche Additive sind beispielsweise Stabilisatoren, Nucleierungsmittel, Entformungsmittel, Pigmente, Flammschutzmittel, Antistatika, Leitfähigkeitszusätze, Füllstoffe, Verstärkungsstoffe und Fasern in den üblichen Mengen.

Im einzelnen können beispielsweise Graphit, Ruß, Metallfasern, Metallpulver, Kieselgur, Talkum, Quarz, Kaolin, Glimmer, Tone, $CaF_2$, $CaCO_3$, Aluminiumoxide, Aluminiumnitrid, Silicate, Bariumsulfat, Glasfasern, C-Fasern, Keramikfasern und anorganische Pigmente, wie z.B. $TiO_2$ und Eisenoxide, zugesetzt werden, sowie als Entformungsmittel beispielsweise Glycerinstearate, Pentaerythrittetrastearat und Trimethylolpropantristearat.

Die erfindungsgemäßen Legierungen können z.B. durch Spritzguß, Extrusion, Blasverformen oder Tiefziehen thermoplastisch zu Formkörpern verarbeitet werden, wobei man beispielsweise die oben genannten

Additive zufügen kann. Unter Formkörper werden z.B. spritzgegossene Formkörper, extrudierte Formkörper, wie Profile, Rohre, Platten, Fasern und Folien, blasverformte Körper, wie Flaschen, Behälter und Beleuchtungskörper, sowie z.B. aus Platten und Folien tiefgezogene Formkörper verstanden.

Die Folien können im Verbund mit anderen Folien zu Verbundfolien verarbeitet werden. Weiterhin können die erfindungsgemäßen Legierungen auch in anderen Verbundwerkstoffen eingesetzt werden, z.B. in Kombination mit Fasern und anderen Polymeren.

Die aus den erfindungsgemäßen Legierungen hergestellten Formkörper haben aufgrund der vorn genannten Eigenschaften Vorteile gegenüber bisher bekannten Werkstoffen, insbesondere für Bauteile im Elektro- und Elektroniksektor, für große, hochbeanspruchte Gehäuseteile, für den Automobilsektor als Karosserieteile und als Teile im Motorraum und für gasdurchlässige und Gase trennende Folien.

Beispiel 1

Polycarbonat aus 1,1-Bis-(4-hydroxyphenyl)-2-methyl-cyclohexan (PC-BP2M)

In 3 l Wasser wurden 184 g (4,6 Mol) NaOH und 282 g (1 Mol) 1,1-Bis-(4-hydroxyphenyl)-2-methylcyclohexan gelöst. Dazu wurden 3 l Methylenchlorid mit darin gelöstem 3,1 g (0,033 Mol) Phenol gegeben. Unter intensivem Rühren wurden dann bei 25°C 148,5 g (1,5 Mol) Phosgen innerhalb von 30 Minuten in das Gemisch eingeleitet. Nach Zugabe von 1,13 g (0,01 Mol) N-Ethylpiperidin wurde das Gemisch 60 Minuten bei 25°C intensiv gerührt. Die bisphenolatfreie alkalisch wäßrige Phase wurde abgetrennt; die organische Phase nach dem Ansäuern mit verdünnter Phosphorsäure mit Wasser elektrolytfrei gewaschen und eingedampft. Das erhaltene Polycarbonat wurde dann durch Trocknung vom restlichen Methylenchlorid befreit. Es war farblos und zeigte eine relative Viskosität $\eta rel = 1,309$ (gemessen in Methylenchlorid, bei c = 5 g/l und 25°C).

Beispiel 2

Copolymerisat aus Bisphenol-A und 1,1-Bis-(4-hydroxyphenyl)-2-methyl-cyclohexan im Molverhältnis 1:1. (CPC-BP2M/BPA)

Beispiel 1 wurde wiederholt mit dem Unterschied, daß die Hälfte des dort eingesetzten Bisphenols durch 114 g (0,5 Mol) 2,2-Bis-(4-hydroxyphenyl)-propan (Bisphenol A) ersetzt wurde.

Das erhaltene Polycarbonat hatte eine relative Viskosität $\eta rel = 1,306$ (gemessen in Methylenchlorid bei 25°C und c = 5 g/l).

Beispiel 3

Polycarbonat aus 1,1-Bis-(4-hydroxyphenyl)-2,4-dimethyl-cyclohexan (PC-BP24DM)

Beispiel 1 wurde wiederholt, mit dem Unterschied, daß das dort eingesetzte Bisphenol durch 296 g (1,0 Mol) 1,1-Bis-(4-hydroxyphenyl)-2,4-dimethylcyclohexan ersetzt wurde.

Das erhaltene Polycarbonat hatte eine relative Viskosität $\eta rel = 1,298$ (gemessen in Methylenchlorid bei 25°C und c = 5 g/l).

Beispiel 4

Polycarbonat aus 1,1-Bis-(4-hydroxyphenyl)-2-methyl-4-tert.-Butylcyclohexan (PC-BP2M4B)

Beispiel 1 wurde wiederholt, mit dem Unterschied, daß das eingesetzte Bisphenol durch 324 g (1,0 Mol) 1,1-Bis-(4-hydroxyphenyl)-2-methyl-4-tert.-butylcyclohexan ersetzt wurde.

Das erhaltene Polycarbonat hatte eine relative Viskosität $\eta rel = 1,303$ (gemessen in Methylenchlorid bei 25°C und c = 5 g/l).

Beispiel 5 (Vergleich)

Polycarbonat aus 1,1-Bis-(4-hydroxyphenyl)-3-methylcyclohexan (PC-BP3M)

Beispiel 1 wurde wiederholt, mit dem Unterschied, daß das dort eingesetzte Bisphenol durch 282 g (1 Mol) 1,1-Bis-(4-hydroxyphenyl)-3-methylcyclohexan ersetzt wurde.

Das erhaltene Polycarbonat hatte eine relative Viskosität ηrel = 1,301 (gemessen in Methylenchlorid bei 25°C und c = 5 g/l).

An Prüfkörpern aus PC-BP3M und aus dem erfindungsgemäßen PC-BP2M wurden Schlagzähigkeiten gemessen (s.Tabelle). Es zeigte sich, daß das erfindungsgemäße PC-BP2M beträchtlich höhere Schlagzähigkeit besitzt, als das PC-BP3M.

Tabelle

Schlagzähigkeit von PC-BP2M und PC-BP3M in Prüfstäben 80 x 10 x 4 mm nach ISO 180-1C

| Polycarbonat | ηrel | Schlagzähigkeit [kJ/m²] |
|---|---|---|
| PC-BP2M | 1,306 | nicht gebrochen |
| PC-BP3M (Vergleich) | 1,301 | 168 |

Beispiel 6

Weitere eingesetzte Polymere

1. PC-BPA
   Polycarbonat aus Bisphenol-A mit Endgruppen aus 4-(1,1,3,3-Tetramethyl-butyl)-phenol, ηrel = 1,302 (gemessen in $CH_2Cl_2$-Lösung, c = 5 g/l, bei 25°C).
2. PCSI-BPA
   Polysiloxan-Polycarbonat-Blockcopolymer aus Bisphenol-A und aus 7 Gew.-% Bisphenol-A-Endgruppen-haltigen Polydimethylsiloxanblöcken (bezogen auf Blockcopolymer) mit einer mittleren Polydimethylsiloxanblocklänge von $\overline{P}_n$ = 70 Dimethylsiloxaneinheiten, ηrel = 1,298 (gemessen wie in Beispiel 1), Polycarbonatendgruppen wie in Beispiel 1.
3. APEC 35
   Aromatisches Polyestercarbonat aus 65 Gew.-% Bisphenol-A-Carbonat-Einheiten und 35 Gew.-% Bisphenol-A-Terephthalat-Einheiten, Endgruppen wie in Beispiel 1, ηrel = 1,311 (gemessen wie in Beispiel 2).
4. PA-AM
   Amorphes Polyamid aus Hexamethylendiamin und Isophthalsäure, ηrel = 2,42 (gemessen in m-Kresol bei 25°C, c = 10 g/l Lösung), Tg = 123°C (gemessen durch Differentialthermoanalyse).
5. PST
   Polystyrol mit einem Gewichtsmittelmolekulargewicht von $\overline{M}w$ = 170.000.
6. PBT
   Polybutylenterephthalat, ηrel = 1,720 (in Phenol/o-Dichlorbenzol 1/1 Gew.-Teile bei 25°C, c = 5 g/l Lösung)
7. PPS
   Polyphenylensulfid, Herstellverfahren nach EP 171 021, Schmelzviskosität $\eta_m$ = 50 Pa x sec (gemessen bei 306°C bei einer Scherrate τ = 100 Pa im Kegel-Platte-Viskosimeter)
8. PUR
   Thermoplastisches Polyurethan mit einem Schmelzbereich von ca. 200 bis 220°C und einem Zahlenmittel-Mol.-Gewicht ($\overline{M}_n$) von 85.700, aufgebaut aus einem Oligoester aus Butylenglykol-1,4 und Adipinsäure ($\overline{M}_n$ 2000), 4,4-Diphenylmethan-diisocyanat und Butandiol-1,4 als Kettenverlängerer, Verhältnis von NCO- zu OH-Gruppen 1,03.
9. SEBS
   Teilhydriertes Polystyrol-Polybutadien-Polystyrol-Blockcopolymer (= Polystyrol-Polyethylen-butylen-Polystyrol-Blockcopolymer), Kraton G 1651, Handelsprodukt der Shell AG.

10. PB-MMA

Pfropfpolymerisat aus 80 Gew.-% Polybutadien und 20 Gew.-% gepfropften Methylmethacrylat, mittlere Kautschukteilchengröße 0,4 µm.

11. AC-MMA

Pfropfpolymerisat aus 80 Gew.-%. vernetztem Butylacrylat-Kautschuk und 20 Gew.-% gepfropftem Methylmethacrylat, mittlere Kautschukteilchengröße 0,5 µm.

12. PB-SAN

Pfropfpolymerisat aus 50 Gew.-% Polybutadien und 50 Gew.-% gepfropften Styrol/Acrylnitril im Gew.-Verhältnis 72/28, mittlere Kautschukteilchengröße 0,4 µm.

13. AC-SAN

Pfropfpolymerisat aus 60 Gew.-% eines vernetzten Butylacrylatkautschuks und 40 Gew.-% gepfropftem Styrol/Acrylnitril, 72/28 Gew.-Teile, mittlere Kautschukteilchengröße 0,5 µm.

Beispiele 7 - 19

Eigenschaften von erfindungsgemäßen Legierungen sind in den Tabellen 1 - 3 aufgeführt. Die Legierungen wurden über die Schmelze in einem Doppelwellenextruder bei Temperaturen zwischen 265 und 330°C gemischt, jeweils bei der niedrigsten Temperatur, bei der noch eine gute Homogenisierung der Legierungsbestandteile gegeben war.

Tabelle 1

Polymerlegierungen I

| | Zusammensetzung Polymerlegierung (Gewichtsteile) | | | | | | | | Eigenschaften | | |
|---|---|---|---|---|---|---|---|---|---|---|---|
| Beispiel | PC-BP2M | PC-BP24DM | PC-BP2M4B | PC-BPA | PCSI-BPA | APEC35 | PA-AM | PST | Vicat B °C | $a_k$ kJ/m² | Bemerkungen |
| 7 | 50 | | | 50 | | | | | 180 | 15 | F |
| 8 | | 50 | | | 50 | | | | 182 | 21 | F |
| 9 | | | 30 | | | 70 | | | 194 | 29 | F |
| 10 | | 70 | | | | | 30 | | 215 | 9 | FF/B |
| 11 | | | 95 | | | | | 5 | 230 | 8 | F |

Vicat B(°C) = Vicat-Erweichungstemperatur VST/B/120 nach ISO 306 DIN 53 460 am Normkleinstab

$a_k$ = Kerbschlagzähigkeit bei 23°C nach ISO 179 DIN 53 453 am Normkleinstab

F = gute Fließfähigkeit der Schmelze

FF = besonders gute Fließfähigkeit der Schmelze

B = benzinfest (Stab 80 x 10 x 4 mm, 5 min bei 25°C in Toluol/Isooctangemisch 1/1 Gew.-Teile mit 0,6 % Randfaserdehnung gelagert), d.h. ohne Risse in den Prüfkörpern nach der Lagerung

Tabelle 2

Polymerlegierungen II

| Beispiel | Zusammensetzung Polymerlegierung (Gewichtsteile) | | | | | | | | | | | Eigenschaften | | |
|---|---|---|---|---|---|---|---|---|---|---|---|---|---|---|
| | PC-BP24DM | PC-BP2M | CPC-BP2M/BPA | PC-BPA | PCSI-BPA | PBT | PPS | PUR | SEBS | PB-MMA | AC-MMA | Vicat B °C | $a_k$ $kJ/m^2$ | Bemerkungen |
| 12 | 48 | | | | 48 | | | | 4 | | | 181 | 19 | B, F |
| 13 | | | 35 | 35 | | | | 20 | | 10 | | 151 | 31 | B, FF |
| 14 | | 55 | | | | | 30 | | | | 15 | 225 | 20 | B, F |
| 15 | 55 | | | | | | 30 | | | | 15 | 225 | 12 | B, F |

Vicat B(°C) = Vicat-Erweichungstemperatur VST/B/120 nach ISO 306 DIN 53 460 am Normkleinstab

$a_k$ = Kerbschlagzähigkeit bei 23°C nach ISO 179 DIN 53 453 am Normkleinstab

F = gute Fließfähigkeit der Schmelze

FF = besonders gute Fließfähigkeit der Schmelze

B = benzinfest (Stab 80 x 10 x 4 mm, 5 min bei 25°C in Toluol/Isooctangemisch 1/1 Gew.-Teile mit 0,6 % Randfaserdehnung gelagert), d.h. ohne Risse in den Prüfkörpern nach der Lagerung

Tabelle 3

Polymerlegierungen III

| | Zusammensetzung Polymerlegierung (Gewichtsteile) | | | | | | | Eigenschaften | | |
|---|---|---|---|---|---|---|---|---|---|---|
| Beispiel | PC-BP2M | CPC-BP2M/BPA | PC-BP24DM | PB-MMA | PB-SAN | AC-MMA | AC-SAN | Vicat B °C | $a_k$ kJ/m² | Bemerkung |
| 16 | 75 | | | 25 | | | | 198 | 27 | B |
| 17 | | 80 | | | 20 | | | 179 | 31 | B, F |
| 18 | | | 80 | | | 20 | | 206 | 26 | B |
| 19 | 85 | | | | | | 15 | 204 | 21 | B |

Vicat B(°C) = Vicat-Erweichungstemperatur VST/B/120 nach ISO 306 DIN 53 460 am Normkleinstab
$a_k$ = = Kerbschlagzähigkeit bei 23°C nach ISO 179 DIN 53 453 am Normkleinstab
F = gute Fließfähigkeit der Schmelze
B = benzinfest (Stab 80 x 10 x 4 mm, 5 min bei 25°C in Toluol/Isooctangemisch 1/1 Gew.-Teile mit 0,6 % Randfaserdehnung gelagert), d.h. ohne Risse in den Prüfkörpern nach der Lagerung

## Patentansprüche

1. Aromatische Polycarbonate mit mittleren Molekulargewichten $\overline{M}w$ von mindestens 10 000, die bifunktionelle Carbonatstruktureinheiten der Formel (I)

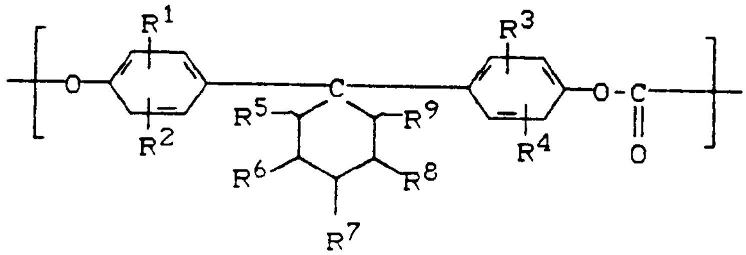

mit

$R^1$, $R^2$, $R^3$, $R^4$ unabhängig voneinander Wasserstoff, $C_1$ bis $C_{12}$-Kohlenwasserstoffrest oder Halogen und mit

$R^5$, $R^6$, $R^7$, $R^8$ und $R^9$ unabhängig voneinander Wasserstoff oder $C_1$- bis $C_{12}$-Kohlenwasserstoffrest, wobei einer der Reste $R^5$ und $R^9$ Wasserstoff und einer ein $C_1$-$C_{12}$-Kohlenwasserstoffrest ist,

in Mengen von 100 bis 1 Mol-%, bezogen auf die Gesamtmenge von difunktionellen Carbonatstruktureinheiten im Polycarbonat, enthalten.

2. Verwendung der aromatischen Polycarbonate des Anspruchs 1 zur thermoplastischen Verarbeitung zu Formkörpern.

3. Thermoplastische Legierung aus
   A) 1 bis 99 Gew.-% mindestens eines thermoplastischen aromatischen Polycarbonats des Anspruchs 1,
   B) 0 bis 99 Gew.-% mindestens eines amorphen von (A) verschiedenen Thermoplasten mit einer Glastemperatur von 40 bis 300°C.
   C) 0 bis 99 Gew.-% mindestens eines teilkristallinen Thermoplasten mit einer Schmelztemperatur von 60 bis 400°C,
   D) 0 bis 99 Gew.-% mindestens eines Kautschuks,
   E) 0 bis 99 Gew.-% mindestens eines Pfropfpolymerisats aus mindestens einem Kautschuk mit mindestens einem aufgepfropften Polymer aus mindestens einem Monomeren aus der Gruppe der Vinylverbindungen, Acryl- und Methacrylverbindungen und Maleinsäureabkömmlinge,

   in denen die Summe aus A), B), C), D) und E) gleich 100 Gew.-% beträgt.

4. Verwendung der thermoplastischen Legierungen des Anspruchs 3 zur thermoplastischen Verarbeitung zu Formkörpern.

## Claims

1. Aromatic polycarbonates with average molecular weights $\overline{M}w$ of at least 10,000 which contain bifunctional carbonate structural units corresponding to formula (I)

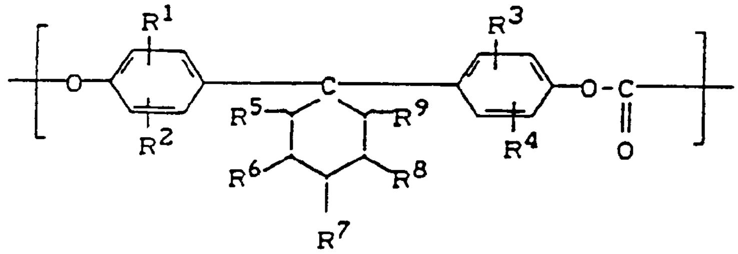

in which

$R^1$, $R^2$, $R^3$ and $R^4$ independently of one another represent hydrogen, a $C_{1-12}$ hydrocarbon radical or halogen and

$R^5$, $R^6$, $R^7$, $R^8$ and $R^9$ independently of one another represent hydrogen or a $C_{1-12}$ hydrocarbon radical, one of the substituents $R^5$ and $R^9$ being hydrogen and one being a $C_{1-12}$ hydrocarbon radical,

in quantities of 100 to 1 mol-%, based on the total quantity of difunctional carbonate structural units in the polycarbonate.

2. The use of the aromatic polycarbonates claimed in claim 1 for thermoplastic processing to mouldings.

3. A thermoplastic blend of

A) 1 to 99% by weight of at least one thermoplastic aromatic polycarbonate according to claim 1,

B) 0 to 99% by weight of at least one amorphous thermoplastic different from (A) having a glass temperature of 40 to 300°C,

C) 0 to 99% by weight of at least one partly crystalline thermoplastic having a melting temperature of 60 to 400°C,

D) 0 to 99% by weight of at least one rubber,

E) 0 to 99% by weight of at least one graft polymer of at least one rubber with at least one grafted-on polymer of at least one monomer from the group of vinyl compounds, acrylic and methacrylic compounds and maleic acid derivatives,

in which the sum of A), B), C), D) and E) is 100% by weight.

4. The use of the thermoplastic blends claimed in claim 3 for thermoplastic processing to mouldings.

## Revendications

1. Polycarbonates aromatiques ayant des poids moléculaires moyens $\overline{M}_p$ d'au moins 10 000, qui contiennent des motifs structuraux carbonate bifonctionnels de formule (I)

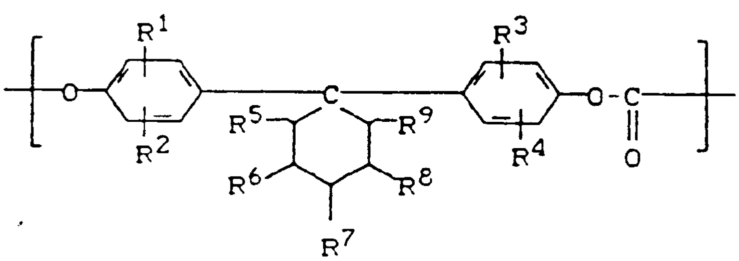

dans laquelle

$R^1$, $R^2$, $R^3$, $R^4$ représentent, indépendamment les uns des autres, de l'hydrogène, un reste d'hydrocarbure en $C_1$ à $C_{12}$ ou un halogène et

$R^5$, $R^6$, $R^7$, $R^8$ et $R^9$ représentent, indépendamment les uns des autres, l'hydrogène ou un reste d'hydrocarbure en $C_1$ à $C_{12}$, l'un des restes $R^5$ et $R^9$ étant de l'hydrogène et l'autre étant un reste d'hydrocarbure en $C_1$ à $C_{12}$,

en quantités de 100 à 1 moles %, par rapport à la quantité totale de motifs structuraux carbonate difonctionnels dans le polycarbonate.

2. Utilisation des polycarbonates aromatiques suivant la revendication 1 pour la mise en oeuvre thermoplastique en vue de produire des pièces moulées.

3. Alliage thermoplastique comprenant

A) 1 à 99 % en poids d'au moins un polycarbonate aromatique thermoplastique suivant la revendication 1,

B) 0 à 99 % en poids d'au moins une matière thermoplastique amorphe différente de (A) ayant une température de transition vitreuse de 40 à 300°C,

C) 0 à 99 % en poids d'au moins une matière thermoplastique partiellement cristalline ayant une température de fusion de 60 à 400°C,
D) 0 à 99 % en poids d'au moins un caoutchouc,
E) 0 à 99 % en poids d'au moins un polymérisat greffé dérivé d'au moins un caoutchouc ayant au moins un polymère greffé formé d'au moins un monomère du groupe des composés vinyliques, des composés acryliques et méthacryliques et de dérivés d'acide maléique,

la somme de A), B), C), D) et E) étant égale à 100 % en poids.

**4.** Utilisation des alliages thermoplastiques suivant la revendication 3 pour la mise en oeuvre thermoplastique en vue de former des pièces moulées.